# EUROPÄISCHE PATENTSCHRIFT

(11) **EP 4 110 579 B1**
(45) Veröffentlichungstag und Bekanntmachung des Hinweises auf die Patenterteilung: **22.10.2025**
(21) Anmeldenummer: 21707669.4
(22) Anmeldetag: 22.02.2021
(51) Int. Cl.: B29C 45/14, G01S 7/02, H01Q 1/42, B29C 45/16, G01S 7/40, G01S 13/931, H01Q 1/02, H01Q 1/32, B29L 31/34, B29L 31/36

(54) **BEHEIZBARES KUNSTSTOFFBAUTEIL UND VERFAHREN ZU DESSEN HERSTELLUNG**
HEATABLE PLASTICS COMPONENT AND METHOD FOR PRODUCING SAME
COMPOSANT EN MATIÈRE PLASTIQUE POUVANT ÊTRE CHAUFFÉ ET PROCÉDÉ POUR LE PRODUIRE

(30) Priorität: 28.02.2020 DE 102020001286
(43) Veröffentlichungstag der Anmeldung: 04.01.2023
(73) Patentinhaber: HELLA GmbH & Co. KGaA, 59552 Lippstadt (DE)
(72) Erfinder: BOUABDALLI, Mohcyn, 79669 Zell im Wiesental (DE); KIMMIG, Reiner, 79674 Todtnau (DE); LECAILLIER, Yves, 77975 Ringesheim (DE); POOTHATHAR, Ganeshkumar, Chennai 600125 Tamil Nadu (IN); SCHWARZ, Roland, 79674 Todtnau (DE); STOLL, Thomas, 79692 Kleines Wiesental (DE)
(74) Vertreter: Behr-Wenning, Gregor
(86) Internationale Anmeldenummer: PCT/EP2021/054304
(87) Internationale Veröffentlichungsnummer: WO 2021/170532

(56) Entgegenhaltungen:
- EP-A1- 1 902 902
- EP-A1- 3 421 215
- EP-A1- 3 514 567
- DE-A1- 102014 002 438
- DE-A1- 102015 218 876
- DE-B3- 102010 044 598
- US-A1- 2018 215 086

## Beschreibung

Die Erfindung betrifft ein beheizbares Kunststoffbauteil und ein Verfahren zu dessen Herstellung.

Bei Kraftfahrzeugen werden in Karosserieteilen Sensoren verbaut, die beispielsweise der Abstandsmessung dienen. Solche Sensoren können in einem Stoßfänger der Vorder- und/oder der Rückseite eingebaut sein und während des Einparkens oder des Fahrbetriebs den Abstand zu einem Hindernis oder einem weiteren Fahrzeug erfassen. Bei mit Radarwellen arbeitenden Sensoren sind Vorkehrungen zu treffen, die sicherstellen, dass die elektronischen Bauteile geschützt sind.

Dafür sind aus dem Stand der Technik radartransparente Abdeckungen bekannt, durch welche die Radarstrahlung des Radarsensors geführt wird. Eine solche Abdeckung des Radarsensors einer Radarvorrichtung wird als Radom bezeichnet. Radome sind u.a. im Bereich der Fahrzeugfront eines Fahrzeugs verbaut. Beispielsweise sind sie in dem Kühlergrill oder in der Stoßstange eines Kraftfahrzeugs derart integriert, dass sie optisch ansprechend und unauffällig ausgestaltet sind.

Ein solches Radom ist aus der DE 10 2005 035 814 A1 bekannt. Das Radom wird im Frontbereich des Kraftfahrzeugs in den Strahlengang eines herkömmlichen Radarsystems eingesetzt, so dass die anderen Komponenten des Radarsystems, insbesondere dessen Sender- und Empfängermittel, vor Witterungseinflüssen, wie Nässe und starker Sonneneinstrahlung, Steinschlag oder dergleichen geschützt sind.

Weiterhin muss sichergestellt sein, dass Vorkehrungen zur Vermeidung von Vereisung im Winter getroffen werden. Es sollte sich keine Eisschicht, Wasserschicht oder Schneeschicht vor dem Abstrahlbereich des Sensors bilden, da sonst die Funktion des Sensors durch eine solche Schicht zum Teil stark beeinträchtigt wird. Dazu ist bekannt, das Radom mit einer Heizeinrichtung zu versehen, wie beispielsweise in der DE 10 2014 214 329 A1 offenbart. Die Heizeinrichtung ist als Heizfolie mit einer Widerstandsbahn ausgebildet und wird in einem Folienverbund angeordnet. Die Vorderseite dieses Folienverbundes bildet eine sichtbare Dekorfolie, die damit einen Teil der Außenhaut des Fahrzeugs bildet. Diese Dekorfolie kann an kundenspezifische Anforderung hinsichtlich Farbe, Design etc. angepasst werden. Rückseitig wird die Dekorfolie mit der Heizfolie und anschließend mit einer Trägerfolie flächenhaft verbunden. Nach der Herstellung wird der Folienverbund mit einem thermoplastischen Kunststoffmaterial hinterspritzt. Diese Trägerschicht wird als Deckelteil ausgeformt und bildet das Radom der Radarvorrichtung.

In der DE 101 56 699 A1 wird eine Frontblende aus Kunststoff in einer charakteristischen Struktur oder in Form eines Markenemblems durch Spritzgießen hergestellt. Anschließend wird eine Rückwand aus Kunststoff hergestellt und Leiterbahnen der Heizvorrichtung auf diese aufgebracht. Beide Kunststoffteile werden danach unter Formschluss miteinander verbunden.

Aus der EP 3 514 567 A1 ist ein Radom und ein Verfahren zu dessen Herstellung bekannt, das eine Heizfolie zwischen zwei Kunststoffelementen zum störungsfreien Betrieb während Schneefalls aufweist.

Die DE 10 2014 002 438 A1 beschreibt ein Verfahren zur Herstellung eines beheizbaren Kunststoff-Radoms, bei dem in ein Folienstück ein oder mehrere elektrisch leitenden Drähte eingebettet werden. Anschließend wird das Folienstück mitsamt dem eingebetteten elektrisch leitenden Draht geformt und in einem weiteren Verfahrensschritt mit einem Kunststoff hinterspritzt.

Aus der EP 1 902 902 A1 ist ein Abdeckelement für eine Öffnung eines Fahrzeugs bekannt, das eine zumindest teilweise metallisierte Folie aufweist, die auf einer Vorderseite mit einer Schicht aus einem transparenten ersten Kunststoff überspritzt ist und auf einer Rückseite mit einer Abdeckschicht aus einem zweiten Kunststoff hinterspritzt ist. Die Folie weist eine Sandwichstruktur mit einer oberen und einer unteren Deckschicht aus Kunststoff und einer dazwischen eingebetteten metallischen Schicht auf, wobei die Folie durch ihre Sandwichstruktur die metallische Schicht schützt.

Die Druckschriften EP 3 421 215 A1 beschreibt ein Verfahren zum Hinterspritzen einer Folie zum Einbetten der Folie zwischen zwei Elemente.

Aus der DE 10 2015 218876 A1 ist ein Verfahren zum Herstellen eines Radoms bekannt, bei dem eine metallische Struktur mit einem thermoplastischen Kunststoff hinterspritzt wird.

Der oben genannte Stand der Technik weist einen Heizdraht in einer dünnen Heizfolie mit einem Durchmesser im Bereich von 40 µm bis 50 µm, gegebenenfalls auch bis 60 µm, auf, damit die optische Wahrnehmbarkeit reduziert wird. Solche dünnen Heizdrähte aus Kupfer oder Kupferlegierungen können beim Tiefziehen, Formen bzw. Biegen der Heizfolie schnell brechen, so dass die Funktion der Heizleistung nicht mehr erfüllt ist. Da die Heizfolie zum Beheizen der äußersten Schicht des Radoms dient, wird sie möglichst nahe an dieser Außenschicht, also direkt hinter dem sichtbaren Frontteil des Kraftfahrzeugs, angeordnet. Befindet sich an dieser Stelle das Markenemblem oder der Kühlergrill des Fahrzeugs, so formt sich die Heizfolie an die Kontur an, unterliegt gegebenenfalls einem starken Biegeradius und die Heizdrähte können brechen.

Nachteilig im Stand der Technik ist, dass Abformungen der Kontur auf die Heizfolie Auswirkung auf die Stabilität der metallischen Heizdrähte der Heizfolie haben. Je feiner die Kontur abgeformt wird, also je kleiner der Biegeradius der Heizfolie ist, desto höher ist die Wahrscheinlichkeit, dass die dünnen Heizdrähte brechen.

Es ist daher Aufgabe der vorliegenden Erfindung, ein verbessertes Verfahren zur Herstellung eines beheizbaren Kunststoffbauteils bereitzustellen, dass die Empfindlichkeit des mindestens einen dünnen Heizdrahtes der Heizfolie berücksichtigt und trotzdem alle Formen und Details einer Kontur mit hoher Genauigkeit abgebildet kann, unter Berücksichtigung wirtschaftlicher Interessen.

Diese Aufgabe wird durch das Verfahren nach Anspruch 1 gelöst. Das Verfahren umfasst die Schritte:
a) Bereitstellen einer flächigen Heizfolie, die eine erste Fläche und eine der ersten Fläche abgewandt gegenüberliegende zweite Fläche aufweist, mit mindestens einem Heizdraht und Anschlusselementen zum elektrischen Anschließen des mindestens einen Heizdrahts,
b) Einlegen der flächigen Heizfolie in eine Spritzgussform,
c) Aufsetzen eines Steckerkorbs auf die Anschlusselemente der flächigen Heizfolie,
d) Hinterspritzen der ersten Fläche der flächigen Heizfolie mit einem Kunststoff zur Anfertigung eines ersten Teilelements des beheizbaren Kunststoffbauteils in der Spritzgussform,
e) Hinterspritzen der zweiten Fläche der flächigen Heizfolie mit einem Kunststoff zur Anfertigung eines zweiten Teilelements des beheizbaren Kunststoffbauteils in der Spritzgussform derart, dass ein Verbund aus dem ersten Teilelement, der flächigen Heizfolie und dem zweiten Teilelement gebildet wird.

### Verbund

Unter dem Begriff Verbund wird ein Umspritzen aller Seiten der flächigen Heizfolie mit einem Kunststoff verstanden. Die Heizfolie ist stoffschlüssig auf ihrer ersten Fläche bzw. Seite mit einem ersten Teilelement und auf der davon abgewandt gegenüberliegende Fläche, also der Rückseite der ersten Seite, ebenfalls stoffschlüssig mit einem zweiten Teilelement verbunden. Dabei können sich das erste und zweite Teilelement über die Flächen der Heizfolie hinaus erstrecken, also eine größere Fläche als die Heizfolie aufweist, abdecken und somit einen direkten Kontakt zueinander bilden. Bei diesem Verbund liegt die flächige Heizfolie zwischen den beiden Teilelementen und diese sind über die Ränder der Heizfolie hinaus direkt stoffschlüssig miteinander verbunden. Ebenfalls kann die stoffschlüssige Verbindung zwischen dem ersten Teilelement und dem zweiten Teilelement dadurch hergestellt werden, dass die Heizfolie mindestens eine Durchtrittsöffnung aufweist. Damit sind die beiden Teilelemente mittels der Durchtrittsöffnung stoffschlüssig miteinander verbunden. Eine Verbindung des ersten Teilelements mit dem zweiten Teilelement ist durch die dazwischenliegende flächige Heizfolie auch indirekt als Verbund möglich, ohne dass das erste Teilelement mit dem zweiten Teilelement in direktem Kontakt steht.

Dass gemäß Anspruch 1 eine flächige Heizfolie in eine Spritzgussform eingelegt wird, hat den Vorteil, dass sich die Heizfolie einfach und genau in der Spritzgussform positionieren lässt, da sie eine flächige bzw. ebene Form aufweist. Jede Art von Verformung, Knicken oder Biegung der Folie erschwert die Positionierung in der Spritzgussform. Weiterhin wird durch jegliche Art der Verformung der Heizfolie, auch durch Ziehen in eine Richtung, der Widerstandswert des Heizdrahts verändert. Diese Schwankungen sind unerwünscht, da ein konstanter Widerstandswert vom Kunden vorgegeben ist, den es einzuhalten gilt. Da die Heizfolie keine Dehnung oder Biegung erfährt, werden die empfindlichen Heizbahnen nicht beschädigt, ein geschlossener Stromkreislauf ist gegeben und sie werden in ihrer Heiz-Funktion nicht beeinträchtigt.

Vorteilhafterweise ist ein Steckerkorb auf die Anschlusselemente der Heizfolie aufgesetzt. Somit wird dieser Steckerkorb beim Hinterspritzen mit einem Kunststoff stoffschlüssig derart mit der Heizfolie verbunden, dass die Anschlusselemente durch den Steckerkorb hindurchragen. Damit wird das Einlegen der Heizfolie in die Spritzgussform vereinfacht und ebenfalls schützt der Steckerkorb die dünnen und somit empfindlichen Anschlusselemente zuverlässig vor Beschädigungen, beispielsweise dass sie nicht verbogen werden. Diese eventuellen Beschädigungen können während des Einlegens in die Spritzgussform, beim Hinterspritzen oder auch später beim Einbau des beheizbaren Kunststoffbauteils auftreten. Weiterhin wird in der Einbauumgebung eine kundenspezifische Anschlussmöglichkeit an die Stromversorgung gewährleistet.

Dass ein Hinterspritzen der ersten Fläche der flächigen Heizfolie mit einem Kunststoff zur Anfertigung eines ersten Teilelements des beheizbaren Kunststoffbauteils in der Spritzgussform erfolgt, hat den Vorteil, dass das erste Teilelement aus einem ersten Kunststoff hergestellt werden kann. Dieses Material kann sich unterscheiden von einem zweiten Kunststoff-Material, das in einem weiteren Verfahrensschritt zum Hinterspritzen verwendet wird. Das Kunststoff-Material kann auch identisch sein.

Vorteilhafterweise erfolgt ein Hinterspritzen der zweiten Fläche der flächigen Heizfolie mit einem Kunststoff zur Anfertigung eines zweiten Teilelements des beheizbaren Kunststoffbauteils in der Spritzgussform derart, dass ein Verbund aus dem ersten Teilelement, der flächigen Heizfolie und dem zweiten Teilelement gebildet wird. Somit wird die Heizfolie form- und stoffschlüssig zwischen den beiden Teilelementen eingebunden und die Heizdrähte sind vor mechanischer Beschädigung geschützt. Ebenfalls sind die elektrisch leitfähigen Heizdrähte vor chemischer Beschädigung geschützt, wie sie beispielsweise durch Korrosion durch Spritzer des Salzwassers auf der Straße auftreten könnten. Weiterhin kann im zweiten Spritzvorgang ein anderes Kunststoffmaterial als beim Hinterspritzen zur Bildung des ersten Teilelements verwendet werden. Das Material kann in Zusammensetzung und/oder Farbe beliebig von dem ersten Kunststoffmaterial des ersten Teilelements abweichen. Weiterhin kann eine freie Wahl der Oberflächenstruktur wie z. B. Muster, Gravur, Farbeffekte gewählt werden. Die Herstellung des beheizbaren Kunststoffbauteils für große Stückzahlen mit nur einem Spritzgusswerkzeug, erfolgt vorteilhafterweise kostengünstig.

Vorteilhafterweise wird die zweite Fläche der Heizfolie derart mit dem Kunststoff hinterspritzt, dass nur ein Teilbereich der zweiten Fläche der Heizfolie zur Bildung des zweiten Teilelements überdeckt wird. Somit ist es möglich, jede beliebige Kontur, wie ein Markenemblem oder eine Lamellen-Struktur auf die Heizfolie aufzubringen. Durch das Aufbringen des Kunststoffs ergibt sich eine Erhöhung, beliebiger Form, auf der Heizfolie. Diese Aufwölbung legt sich dann in die Kavität eines Frontelements ein. Dadurch entsteht kein Hohlraum zwischen Heizfolie und Frontelements, der die Funktion der Radarvorrichtung beeinträchtigen würde.

Zweckmäßig ist dabei vorgesehen, dass die flächige Heizfolie mindestens eine Durchtrittsöffnung aufweist, durch die das zweite Teilelement mit dem ersten Teilelement stoffschlüssig verbunden wird. Damit ist die Heizfolie sicher und fest zwischen den beiden Teilelementen eingebunden. Weiterhin können eventuell auftretende Faltenbildung der Heizfolie, die durch den Spritzdruck entstehen, ausgeglichen werden.

Vorteilhaft ist weiterhin vorgesehen, dass ein Frontelement passgenau derart über das zweite Teilelement angebracht wird, dass das Frontelement die Heizfolie ganzflächig abdeckt, an den Außenseiten der Flächen die Heizfolie überdeckt und mit dem ersten Teilelement, insbesondere durch Kleben, verbunden wird. Da das zweite Teilelement entsprechend dem Kundenwunsch beliebige Konturen annehmen kann, werden flexible Möglichkeiten der Ausgestaltung des Frontelements geschaffen.

Vorteilhafterweise werden an dem ersten Teilelement Befestigungselemente zur Befestigung an dem Kraftfahrzeug mit gespritzt. Somit kann das beheizbare Kunststoffbauteil direkt am Fahrzeug eingebaut werden, ohne dass es einem weiteren Bearbeitungsschritt unterzogen werden müsste.

Vorteilhaft ist weiterhin vorgesehen, dass die Anschlusselemente elektrisch leitfähiges Material aufweisen und mit der flächigen Heizfolie vernietet werden. Damit wird jegliche auftretende Zugspannung, wie sie beim Schweißen oder Löten auftritt, von den empfindlichen Heizdrähten der Heizfolie ferngehalten und eine Belastung der Mechanik wird minimiert. Durch das Nieten erfolgt eine einfache, schnelle, günstige und robuste Möglichkeit, die dünne Folie mit den Anschlusselementen für den elektrischen Anschluss der Heizdrähte unlösbar zu verbinden.

Zweckmäßigerweise wird das erste Teilelement mit einem anderen Kunststoffmaterial als das zweite Teilelement gespritzt. Das Material kann in Zusammensetzung und/oder Farbe beliebig variieren.

Die oben genannte Aufgabe wird ebenfalls bezüglich des beheizbaren Kunststoffbauteils mit den Merkmalen des Anspruchs 9 gelöst.

Die Vorteile des beheizbaren Kunststoffbauteils entsprechen den oben, mit Bezug auf das erfindungsgemäße Verfahren, genannten Vorteilen.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine schematische Darstellung einer flächigen Heizfolie mit mindestens einem Heizdraht,
- Fig. 1A: eine weitere schematische Darstellung der flächigen Heizfolie,
- Fig. 1B: schematische Darstellung des Steckerkorbs,
- Fig. 2: eine schematische Darstellung der Heizfolie mit erstem Teilelement,
- Fig. 3A: eine Explosionsdarstellung eines Ausführungsbeispiels,
- Fig. 3B: eine schematische Darstellung eines Frontelements,
- Fig. 4: eine schematische Darstellung eines Ausführungsbeispiels und
- Fig. 5: Schnittdarstellung des beheizbaren Kunststoffbauteils.

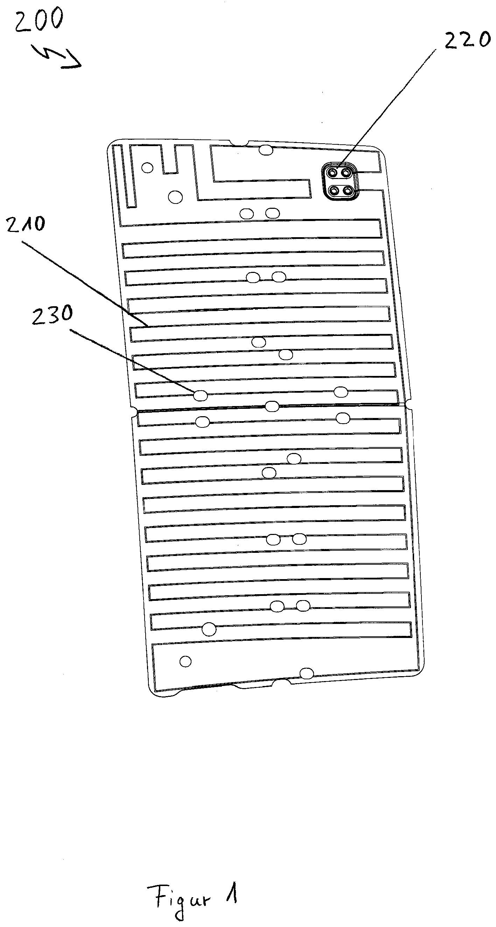

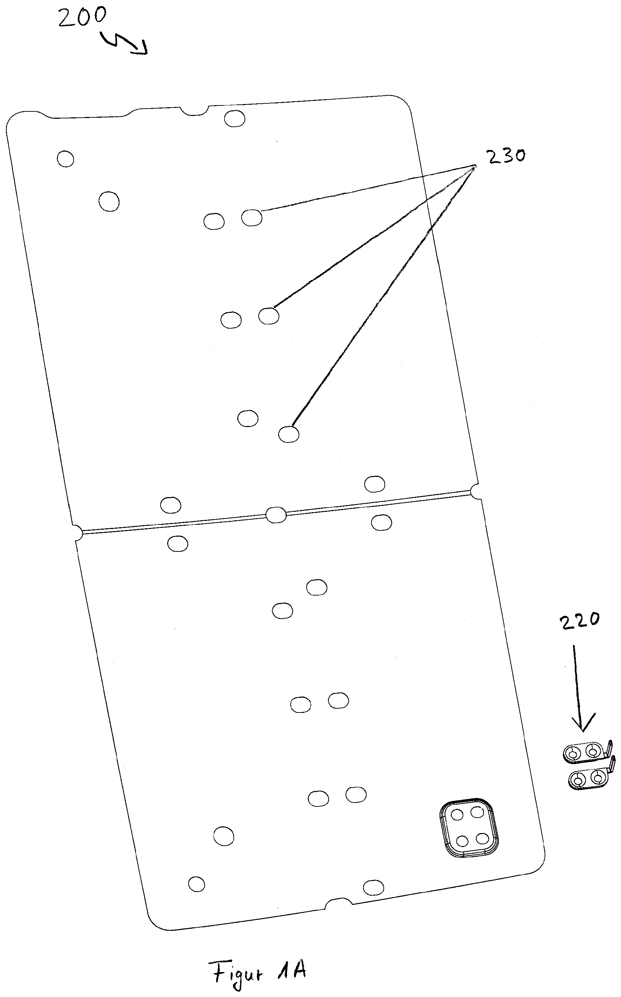

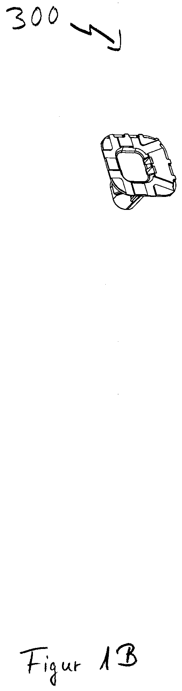

Die Figur 1 zeigt eine ebene Heizfolie 200 in ihrem Ausgangszustand. Die Folie ist als flächiges Element mit zwei Seiten ausgebildet. Die eine Seite wird als erste Fläche und die abgewandt gegenüberliegende Seite als zweite Fläche benannt. Diese flächige Heizfolie 200 weist mindestens einen Heizdraht 210 auf. Die Heizfolie 200 kann aus einem thermoplastischen Kunststoff wie Polyethylennaphthalat (PEN), Polycarbonat (PC), Poyamit (PI), Polymethyl-Methacrylat (PMMA) oder ähnlichem hergestellt sein. Der Heizdraht 210 besteht aus einem leitfähigen Material, wie beispielsweise Kupfer. In dieser Ansicht ist der Heizdraht 210 auf einer ersten Fläche aufliegend angebracht. Anstelle des einen Heizdrahts 210 können
beispielsweise entsprechend mehrere Heizdrähte auf der Folie angebracht werden. Die Heizdrähte können auch in der Heizfolie 200 eingebettet sein. Sie sind derart angeordnet, dass sie nicht nur eine radartransparente Struktur bilden, sondern auch eine hinreichende Heizleistung erbringen, die im Ergebnis die Frostfreiheit der Kunststoff-Abdeckung ermöglicht. Die Geometrie der hier dargestellten Heizfolie 200 sowie die geometrische Verlegung des Heizdrahts ist beispielhaft in Figur 1 dargestellt und können jede andere geometrische Form aufweisen. Die Geometrie der Heizfolie 200 ist in diesem Ausführungsbeispiel rechteckförmig gewählt und die Heizdrähte sind beispielhaft mäanderförmig auf oder alternativ in, also eingebettet, der Heizfolie 200 angeordnet.

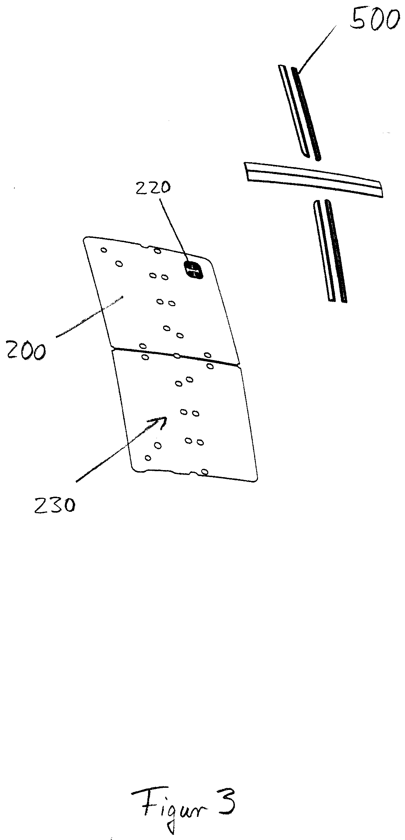

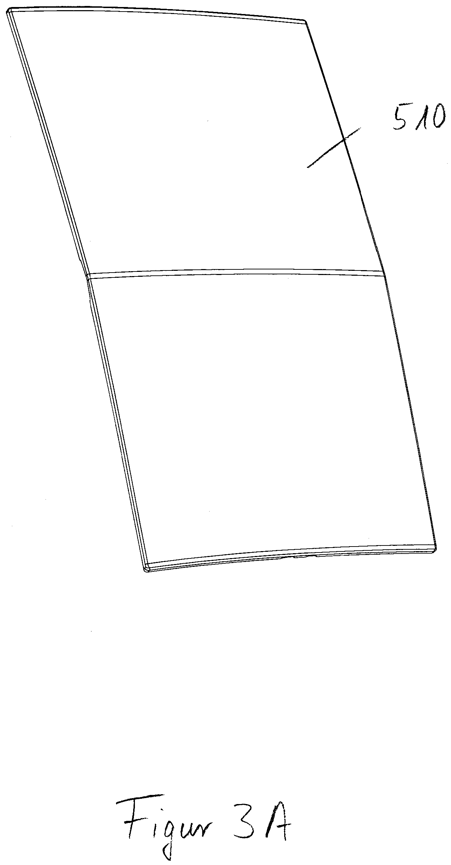

Zum späteren Positionieren der flächigen Heizfolie 200 in der Spritzgussform sind Positionier-Löcher in der Heizfolie 200 angeordnet, die die Heizleistung nicht beeinträchtigen. Weiterhin kann die Heizfolie 200 in allen Ausführungsbeispielen Durchtrittsöffnungen 230 für eine stoffschlüssige Verbindung aufweisen, die in den Ausführungen zu Figur 3 beschrieben werden. Die mindestens eine Durchtrittsöffnung 230 ist hier mehrfach schematische dargestellt. Auch bei mehreren Durchtrittsöffnungen 230 liegen diese zwischen den Windungen des mindestens einen Heizdrahts 210 und beeinträchtigen die Funktion des mindestens einen Heizdrahts 210 nicht..

Figur 1A zeigt in einer schematischen Darstellung die Heizfolie 200 mit der Anordnung von mehreren Durchtrittsöffnungen 230. Der mindestens eine Heizdraht 210 ist in dieser Ansicht nicht dargestellt. Zum elektrischen Kontaktieren des mindestens einen Heizdrahts 210 sind Anschlusselemente 220 aus elektrisch leitfähigem Material vorgesehen. Die jeweiligen Enden des mindestens einen Heizdrahts 210 der flächigen Heizfolie 200 werden an einer Stelle der Heizfolie 200 mit diesen Anschlusselementen 220 verbunden, um einen elektrischen Anschluss zu ermöglichen. Schematisch sind die Anschlusselemente 220 neben der Heizfolie als einzelnes Bauteil dargestellt. Diese Anschlusselemente 220 werden mit der Folie bevorzugt durch Nieten verbunden, so dass ein stabiler und zuverlässiger elektrischer Kontakt entsteht. In dem unteren rechten Bereich dieser Darstellung der Heizfolie 200 ist eine viereckige Fläche angedeutet, die den Kontaktbereich der Anschlusselemente 220 mit dem nicht dargestellten Heizdraht 210 andeutet. In diesem Bereich werden die Anschlusselemente 220 mit der Heizfolie 200 vernietet. Ebenfalls ist durch das Vernieten von dünner Heizfolie 200 und Anschlusselementen 220 ein kraftschlüssiger Verbund gegeben, der die Zugbelastung auf den mindestens einen Heizdraht 210 minimiert.

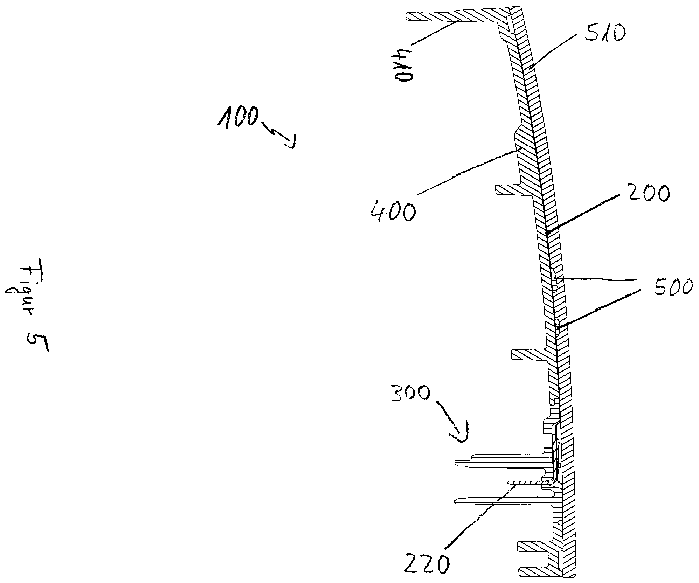

Bevor die flächige Heizfolie 200 in die Spritzgussform eingelegt wird, kann auf die Anschlusselemente 220 ein Steckerkorb 300 aufgesetzt werden, der in Figur 1B dargestellt ist. Die elektrischen Anschlusselemente 220 sind durch den Steckerkorb 300 hindurchgeführt, so dass nach dem Hinterspritzen ein Standardanschluss des mindestens einen Heizdrahts 210 über die Anschlusselemente 220 an die Stromversorgung bzw. das Bordnetz des Kraftfahrzeugs gegeben ist, siehe Figur 5.

Die so bestücke, flächige Heizfolie 200 wird in eine Form eines Spritzguss-Werkzeuges eingelegt. Da die Heizfolie 200 flach ist, lässt sie sich mit den vorkonfigurierten Positionieröffnungen schnell und einfach in der Spritzgussform positionieren. Ebenfalls ermöglicht der aufgesetzte Steckerkorb 300 ein einfaches Einlegen in die Spritzgussform und schützt die dünnen Anschlusselemente 220 vor mechanischer Beschädigung. Der Steckerkorb 300 vereinfacht ebenso das Einlegen in die Spritzgussform. Dadurch wird jegliche Art der Verformung der Heizfolie, auch durch Ziehen in eine Richtung, vermieden. Da sich der Widerstandswert des Heizdrahts, insbesondere wenn der Heizdraht geknickt wird, verändert, ist der Verfahrensschritt des Einlegens der Heizfolie in die Spritzgussform besonders wichtig. Schwankungen im Widerstandswert der Heizdrähte sind unerwünscht, da ein konstanter Widerstandswert vom Kunden vorgegeben ist, den es einzuhalten gilt. Dies spart Zeit im Herstellungsverfahren und ermöglicht ein sicheres Einlegen in die Spritzgussform, ohne versehentlichen Versatz oder Verrutschen der Heizfolie 200 bei dem Hinterspritzen mit hohem Druck. Anschließend wird die Heizfolie 200 auf ihrer ersten flächigen Seite, beispielsweise an der der Steckerkorb 300 auf die Anschlusselemente 220 aufgesetzt ist, mit einem thermoplastischen Kunststoff hinterspritzt. Durch diesen ersten Spritzvorgang wird ein erstes Teilelement 400, das form- und stoffschlüssig mit der flächigen Heizfolie 200 verbunden ist, erzeugt. Ebenfalls ist der Steckerkorb 300 durch Um- und Hinterspritzen mit dem Kunststoff mit der Heizfolie 200 verbunden. Beispielsweise wird ein Trägerelement erzeugt, welches in Strahlgangrichtung der Radarvorrichtung vor der Heizfolie 200 angeordnet ist.

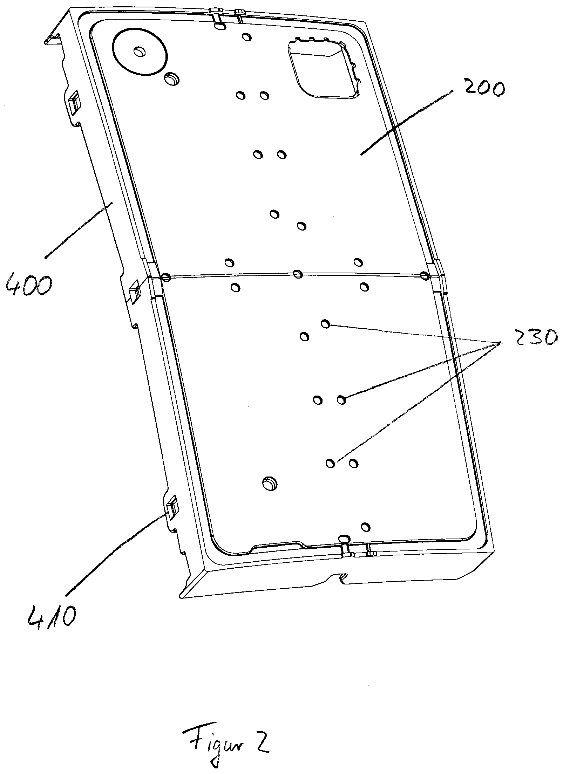

Figur 2 zeigt den Verbund aus diesem ersten Teilelement 400 und der flächigen Heizfolie 200, hier ohne Heizdraht 210 dargestellt, der durch das Hinterspritzen entstanden ist. Der Steckerkorb 300 ist auf der hinteren Seite der Heizfolie 200 ebenfalls fest mit dem ersten Teilelement 400 durch Hinterspritzen verbunden. Dieser Sachverhalt wird schematisch angedeutet durch die viereckige Aussparung oben rechts in der Heizfolie 200. Die Anschlusselemente 220,aus Figur 1A, die durch den Steckerkorb 300 hindurchragen, werden beim Hinterspritzen des Steckerkorbs 300 nicht beeinträchtigt. Auch können an dem ersten Teilelement 400, in dieser Darstellung das Trägerelement, Befestigungselemente 410 mit angespritzt werden, die eine spätere Montage des beheizbaren Kunststoffbauteils 100, insbesondere des beheizbaren Radoms, im Kraftfahrzeug ermöglichen. Sichtbar in Figur 2 sind die überstehenden Ränder des ersten Teilelements 400, die über die Ränder der Heizfolie 200 hinausragen. Somit ist die Heizfolie 200 mechanisch stabil in dem ersten Teilelement 400 eingebettet. Das erste Teilelement 400 verbleibt in der Spritzgussform während diese, als Verwendung einer Wendeform-Spritzvorrichtung, gewendet werden kann, um das zweite Teilelement 500 durch Hinterspritzen auf die flächige Heizfolie 200 aufzubringen. Das Hinterspritzen des zweiten Teilelements kann auch ohne Wenden der Spritzgussform erfolgen. Die Durchtrittsöffnungen 230, in dieser Figur mehrfach in der Heizfolie 200 zu erkennen, ermöglichen, neben den Rändern, auch den stoffschlüssigen Verbund des ersten Teilelements 400 mit dem zweiten Teilelement 500. Weiterhin sind Befestigungselemente 410 dargestellt, die das Anbringen des beheizbaren Kunststoffbauteils 100 in einer Einbauumgebung ermögliche.

In diesem nächsten Verfahrensschritt wird die zweite Fläche der Heizfolie 200 mit einem Kunststoff, insbesondere einem thermoplastischen Kunststoff, hinterspritzt. Dieses Material kann identisch mit dem Material des ersten Spritzgusses sein, oder es wird ein anderes Material verwendet.

Figur 3A zeigt in einer Explosionsdarstellung ein Beispiel für eine Oberflächenstruktur, die beim zweiten Spritzvorgang aufgetragen werden kann. Für den zweiten Spritzvorgang kann das Spritzguss-Werkzeug gewendet werden, so dass die zweite flächige Seite der Heizfolie 200 hinterspritzt wird. An dieser Seite der Heizfolie 200 wird das zweite Teilelement 500 angespritzt. Dieses zweite Teilelement 500 ist beispielsweise in Strahlgangrichtung der Radarvorrichtung hinter der Heizfolie 200 angeordnet, wenn das erste Teilelement 400 in Strahlgangrichtung der Radarvorrichtung vor der flächigen Heizfolie 200 angeordnet ist. Dieser Teil des beheizbaren Kunststoffbauteils 100, insbesondere des beheizbaren Radoms, kann kundenspezifisch ausgebildet werden.

Soll beispielsweise ein Markenemblem oder eine Lamellenform abgebildet werden, so entstehen auf der Rückseite des Frontelements 510 Hohlräume, die die Radarfunktion beeinträchtigen und im schlimmsten Fall stören würden. In dem zweiten Spritzgussverfahrensschritt werden genau diese Strukturen als zweites Teilelement 500 auf die Heizfolie 200 hinterspritzt. In Figur 3A wird beispielhaft ein Steg mit Lamellen auf der Heizfolie 200 als Aufwölbung aufgespritzt. Diese Aufwölbungen, die hier als Explosionsdarstellung gezeigt sind, sind formschlüssig mit der Heizfolie 200 und dem hier nicht dargestellten ersten Teilelement 400 verbunden. Wird das zweite Teilelement 500 mit seinen äußeren Rändern über die Ränder der Heizfolie 200 hinaus hinterspritzt, so erfolgt eine stoffschlüssige Verbindung des ersten Teilelements 400 mit dem zweiten Teilelement über die Ränder. Weiterhin kann die Heizfolie 200 mindestens eine Durchtrittsöffnung 230 aufweisen, so dass sich das erste Teilelement 400 mit dem zweiten Teilelement 500 stoffschlüssig durch diese Öffnung verbinden kann. Diese mindestens eine Durch-
trittsöffnung 230 ist derart in die flächige Heizfolie 200 eingebracht, dass sie zwischen dem beispielsweise mäanderförmig verlegten, hier nicht dargestellten, Heizdraht 210 angeordnet ist und die Heizfunktion nicht beeinträchtigt.

Figur 3B stellt ein kundenspezifisches Frontelement 510 dar. Dies kann selbstverständlich von diesem Ausführungsbeispiel abweichen. Dieses kundenspezifische Frontelement 510 wird mit seinen Kavitäten passgenau auf die Aufwölbungen des zweiten Trägerelements 500 gelegt. Das Frontelement 510 und das erste Teilelement 400 werden aneinander befestigt, beispielsweise durch Kleben.

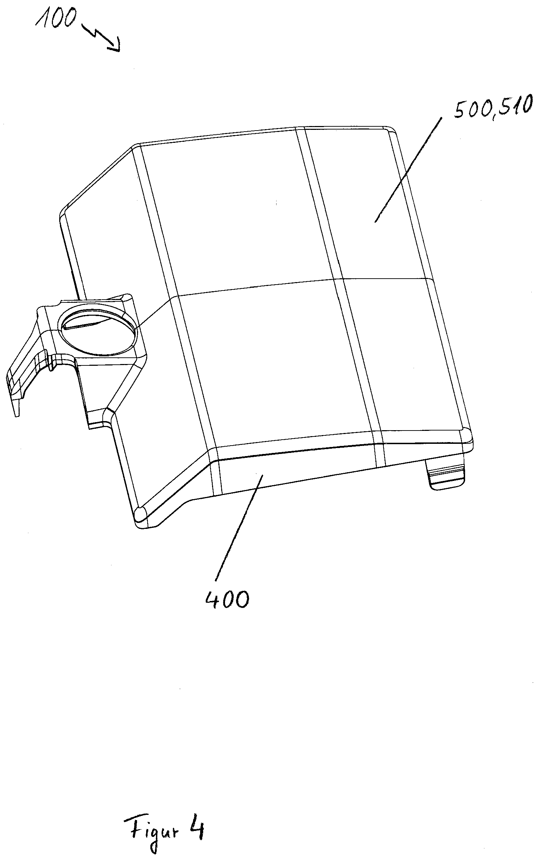

Figur 4 zeigt das beheizbare Kunststoffbauteil 100 als Fertigteil, wie es als separates Bauteil verbaut wird. In diesem weiteren Ausführungsbeispiel ist das zweite Teilelement 500 als Frontelement 510 ausgebildet, das in dem zweiten Spritzgussverfahrensschritt durch Hinterspritzen vollflächig hergestellt wird. Das zweite Teilelement 500, wird, wie auch das erste Teilelement 400, über die Ränder der flächigen Heizfolie 200 hinaus hinterspritzt, so dass es eine größere Fläche abdeckt als die Heizfolie 200 aufweist. Somit legen sich diese Ränder des ersten Teilelements 400 und des zweiten Teilelements 500 stoffschlüssig aufeinander. Alternativ kann die Heizfolie 200 auch bei diesem Ausführungsbeispiel Durchtrittsöffnung 230 aufweisen, so dass die stoffschlüssige Verbindung nicht nur über die Ränder, sondern auch durch die Durchtrittsöffnungen 230 erfolgen kann. Damit sind beide Teilelemente 400, 500 derart miteinander verbunden, dass die flächige Heizfolie 200 form- und stoffschlüssig dazwischen liegt und die Heizfolie 200 und somit auch die Heizdrähte 210 optimal vor Beschädigung geschützt sind.

Da das einstückige Fertigteil als Verbund aus dem ersten Teilelement 400, der Heizfolie 200, dem Steckerkorb 300 und dem zweiten Teilelement 500 erzeugt wird, kann es direkt verbaut werden, ohne dass weitere Fertigungsschritte erfolgen müssen. Da der elektrische Anschluss mit den Anschlusselementen 220, die durch den Steckerkorb 300 hindurchgeführt sind, an die Stromversorgung, beispielsweise dem Bordnetz eines Kraftfahrzeugs, erfolgt ermöglicht dies einen sofortigen Anschluss. Der elektrische Anschluss muss also nicht durch Schweißen oder Löten hergestellt werden. Ebenso bedarf es keiner Nachbearbeitung oder weiteren Zwischenbearbeitungsschritte des gespritzten beheizbaren Kunststoffbauteils 100 in der Form, dass weitere Elemente angebracht werden müssten. Beispielsweise kann das Radom 100 als Abdeckung direkt vor der Radarvorrichtung verbaut werden.

Bei dem zweiten Spritzguss-Verfahrensschritt kann das Hinterspritzen mit einem anderen Kunststoff-Material, als bei dem ersten Hinterspritzen verwendeten Kunststoff, erfolgen. Beispielsweise kann das zweite Teilelement 500 das sichtbare Frontelement 510 sein und sollte somit die erzeugte Wärme gut nach außen leiten können. Dafür kann das Kunststoff-Material mit Zusatzstoffen versehen werden, die eine bessere Wärmeleitfähigkeit ermöglichen. Dies können beispielsweise Metallpartikel, Karbon- und/oder Keramikpartikel und/oder andere Zusatzstoffe sein.

Als Kunststoff-Material kann ein thermoplastischer Kunststoff, insbesondere Polyethylennaphthalat, Polypropylen, Polykarbonat, Polyehylen und/oder Polymethyl-methacrylat für beide Teilelemente 400, 500 verwendet werden.

Die Figur 5 zeigt eine Schnittdarstellung des erfindungsgemäßen beheizbaren Kunststoffbauteils 100. Die flächige Heizfolie 200 ist stoffschlüssig mit dem ersten Teilelement 400 hinterspritzt. Das erste Teilelement 400 weist Befestigungselemente 410 und den mit hinterspritzten Steckerkorb 300 auf. Durch den Steckerkorb 300 hindurchgeführt ist das elektrische Anschlusselement 220. Vom Steckerkorb 300 abgedeckt ist die Stelle des Anschlusselements 220, an der dieses mit der Heizfolie 200 vernietet ist. Auf die Heizfolie 200 ist das zweiten Teilelement 500 aufgespritzt. Das Frontelement 510 weist an den Stellen Kavitäten auf, an denen sie formschlüssig an dem zweiten Teilelement 500 anliegt.

### Bezugszeichenliste

- 100: beheizbares Kunststoffbauteil, Radom

- 200: Heizfolie
- 210: Heizdraht
- 220: Anschlusselemente
- 230: Durchtrittsöffnungen

- 300: Steckerkorb

- 400: erstes Teilelement
- 410: Befestigungselemente

- 500: zweites Teilelement
- 510: Frontelement

## Patentansprüche

1. Verfahren zur Herstellung eines beheizbaren Kunststoffbauteils (100), insbesondere eines beheizbaren Radoms für ein Kraftfahrzeug, umfassend die Schritte:
a) Bereitstellen einer flächigen Heizfolie (200), die eine erste Fläche und eine der ersten Fläche abgewandt gegenüberliegende zweite Fläche aufweist, mit mindestens einem Heizdraht (210) und Anschlusselementen (220) zum elektrischen Anschließen des mindestens einen Heizdrahts (210),
b) Einlegen der flächigen Heizfolie (200) in eine Spritzgussform,
c) Aufsetzen eines Steckerkorbs (300) auf die Anschlusselemente (220) der flächigen Heizfolie (200),
d) Hinterspritzen der ersten Fläche der flächigen Heizfolie (200) mit einem Kunststoff zur Anfertigung eines ersten Teilelements (400) des beheizbaren Kunststoffbauteils in der Spritzgussform,
**gekennzeichnet durch**
e) Hinterspritzen der zweiten Fläche der flächigen Heizfolie (200) mit einem Kunststoff zur Anfertigung eines zweiten Teilelements (500) des beheizbaren Kunststoffbauteils in der Spritzgussform derart, dass ein Verbund aus dem ersten Teilelement (400), der flächigen Heizfolie (200) und dem zweiten Teilelement (500) gebildet wird, wobei die zweite Fläche der Heizfolie (200) derart mit dem Kunststoff hinterspritzt wird, dass nur ein Teilbereich der zweiten Fläche der Heizfolie (200) zur Bildung des zweiten Teilelements (500) überdeckt wird und wobei die flächige Heizfolie (200) mindestens eine Durchtrittsöffnung (230) aufweist, durch die das zweite Teilelement (500) mit dem ersten Teilelement (400) stoffschlüssig verbunden wird.

2. Verfahren nach Anspruch 1, **dadurch gekennzeichnet, dass** ein Frontelement (510) passgenau derart über das zweite Teilelement (500) angebracht wird, dass das Frontelement (510) die Heizfolie (200) ganzflächig abdeckt, an den Außenseiten die Heizfolie (200) überdeckt und mit dem ersten Teilelement (400), insbesondere durch Kleben, verbunden wird.

3. Verfahren nach einem der vorangegangenen Ansprüche, **dadurch gekennzeichnet, dass** an dem ersten Teilelement (400) Befestigungselemente (410) zur Befestigung an dem Kraftfahrzeug mit gespritzt werden.

4. Verfahren nach einem der vorangegangenen Ansprüche, **dadurch gekennzeichnet, dass** die Anschlusselemente (220) elektrisch leitfähiges Material aufweisen und mit der flächigen Heizfolie (200) vernietet werden.

5. Verfahren nach einem der vorangegangenen Ansprüche, **dadurch gekennzeichnet, dass** das erste Teilelement (400) mit einem anderen Kunststoff-material als das zweite Teilelement (500) gespritzt wird.

6. Beheizbares Kunststoffbauteil (100), insbesondere ein beheizbares Radom (100), umfassend
- eine flächige Heizfolie (200), die eine erste Fläche und eine der ersten Fläche abgewandt gegenüberliegende zweite Fläche aufweist, mit mindestens einem Heizdraht (210) und mit elektrisch leitfähigen Anschlusselementen (220) für den mindestens einen Heizdraht (210),
- einen Steckerkorb (300) zum Durchführen der elektrisch leitfähigen Anschlusselemente (220),
- ein erstes und ein zweites Teilelement (400, 500) als Verbund mit der Heizfolie (200), ausgebildet durch stoffschlüssiges Hinterspritzen der ersten Fläche und der zweiten Fläche der flächigen Heizfolie (200) mit einem Kunststoff,
**dadurch gekennzeichnet, dass** das zweite Teilelement (500) derart ausgebildet ist, dass nur ein Teilbereich der zweiten Fläche der Heizfolie (200) in direktem Kontakt stoffschlüssig überdeckt ist und wobei die flächige Heizfolie (200) mindestens eine Durchtrittsöffnung (230) aufweist, zum stoffschlüssigen Verbinden des ersten Teilelements (400) mit dem zweiten Teilelement (500).

## Claims

1. A method for manufacturing a heatable plastic component (100), in particular a heatable radome for a motor vehicle, comprising the steps:
a) provision of a flat heating foil (200) having a first surface and a second surface opposite the first surface, with at least one heating wire (210) and connecting elements (220) for electrical connection of the at least one heating wire (210),
b) insertion of the flat heating foil (200) into an injection mould,
c) mounting of a plug basket (300) onto the connecting elements (220) of the flat heating foil (200),
d) back-injection moulding of the first surface of the flat heating foil (200) with a plastic to produce a first sub-element (400) of the heatable plastic component in the injection mould,
**characterised by**
e) back-injection moulding of the second surface of the flat heating foil (200) with a plastic to produce a second sub-element (500) of the heatable plastic component in the injection mould in such a way that a bond is formed between the first sub-element (400), the flat heating foil (200) and the second sub-element (500),with the second surface of the heating foil (200) being back-injected with the plastic in such a way that only a partial region of the second surface of the heating foil (200) is covered to form the second sub-element (500), said flat heating foil (200) having at least one inlet opening (230) through which the second sub-element (500) is bonded to the first sub-element (400) by fusion.

2. A method according to Claim 1, **characterised in that** a front element (510) is fitted precisely over the second sub-element (500) in such a way that the front element (510) covers the heating foil (200) over its entire surface, covers the heating foil (200) on the outer sides and is connected to the first sub-element (400), in particular by gluing.

3. A method according to one of the preceding claims, **characterised in that** fastening elements (410) for fastening to the motor vehicle are injection moulded onto the first sub-element (400).

4. A method according to one of the preceding claims, **characterised in that** the connection elements (220) comprise electrically conductive material and are riveted to the flat heating foil (200).

5. A method according to one of the preceding claims, **characterised in that** the first sub-element (400) is injection moulded from a different plastic material than the second sub-element (500).

6. A heatable plastic component (100), in particular a heatable radome (100), comprising
- a flat heating foil (200) having a first surface and a second surface opposite the first surface, with at least one heating wire (210) and with electrically conductive connecting elements (220) for at least one heating wire (210),
- a plug basket (300) through which the electrically conductive connecting elements (220) pass,
- a first and a second sub-element (400, 500) as a composite with the heating foil (200), formed by back-injection moulding and fusion of the first surface and the second surface of the flat heating foil (200) with a plastic material,
**characterised in that** the second sub-element (500) is formed in such a way that only a partial area of the second surface of the heating foil (200) is covered and fused in direct contact, said heating foil (200) having at least one inlet opening (230) for bonding of first sub-element (400) to the second sub-element (500).

## Revendications

1. Procédé de fabrication d'un composant plastique chauffant (100), en particulier d'un radôme chauffant pour un véhicule automobile, comprenant les étapes suivantes :
a) Mise à disposition d'une feuille chauffante plane (200) qui présente une première surface et une deuxième surface opposée à la première surface avec au moins un fil chauffant (210) et des éléments de raccordement (220) pour le raccordement électrique d'au moins un fil chauffant (210),
b) Mise en place de la feuille chauffante plane (200) dans un moule à injection,
c) Mise en place d'un boîtier de fiche (300) sur les éléments de raccordement (220) de la feuille chauffante plate (200),
d) Injection derrière la première surface de la feuille chauffante plane (200) d'une matière plastique pour la fabrication d'un premier élément partiel (400) du composant plastique chauffant dans le moule à injection
**caractérisé par**
e) l'injection derrière la deuxième surface de la feuille chauffante plane (200) d'une matière plastique pour la fabrication d'un deuxième élément partiel (500) du composant plastique chauffant dans le moule à injection de manière à former un composant complet à partir du premier élément partiel (400), de la feuille chauffante plane (200) et du deuxième élément partiel (500), la matière plastique étant injectée derrière la deuxième surface de la feuille chauffante (200) de manière à ce que seule une zone partielle de la deuxième surface de la feuille chauffante (200) soit recouverte pour former le deuxième élément partiel (500) et la feuille chauffante plane (200) présentant au moins une ouverture de passage (230) à travers laquelle le deuxième élément partiel (500) est relié au premier élément partiel (400) par liaison de matière.

2. Procédé selon la revendication 1 **caractérisé en ce qu'**un élément frontal (510) est placé avec précision sur le deuxième élément partiel (500) de manière à ce que l'élément frontal (510) recouvre la feuille chauffante (200) sur toute sa surface, recouvre la feuille chauffante (200) sur les côtés extérieurs et soit relié au premier élément partiel (400), notamment par collage.

3. Procédé selon l'une des revendications précédentes **caractérisé en ce que** des éléments de fixation (410) sont également injectés sur le premier élément partiel (400) pour la fixation sur le véhicule automobile.

4. Procédé selon l'une des revendications précédentes **caractérisé en ce que** les éléments de raccordement (220) présentent un matériau électriquement conducteur et sont rivetés avec la feuille chauffante plane (200).

5. Procédé selon l'une des revendications précédentes **caractérisé en ce que** le premier élément partiel (400) est moulé par injection avec un matériau plastique différent de celui du deuxième élément partiel (500).

6. Composant plastique chauffé (100), en particulier un radôme chauffant (100), comprenant
- une feuille chauffante plane (200) qui présente une première surface et une deuxième surface opposée à la première surface avec au moins un fil chauffant (210) et des éléments de raccordement (220) électriquement conducteurs pour au moins un fil chauffant (210),
- un boîtier de fiche (300) pour le passage des éléments de raccordement électriquement conducteurs (220),
- un composant constitué d'un premier et d'un deuxième élément partiel (400, 500) reliés à la feuille chauffante (200) réalisé par injection d'une matière plastique derrière la première surface et la deuxième surface de la feuille chauffante plane (200),
**caractérisé en ce que** le deuxième élément partiel (500) est réalisé de manière à ce que seule une zone partielle de la deuxième surface de la feuille chauffante (200) soit recouverte par liaison de matière par contact direct et **en ce que** la feuille chauffante plane (200) présente au moins une ouverture de passage (230) pour relier par liaison de matière le premier élément partiel (400) au deuxième élément partiel (500).
